# EUROPEAN PATENT APPLICATION

(11) **EP 2 874 455 A1**
(43) Date of publication of application: **20.05.2015**
(21) Application number: 13832327.4
(22) Date of filing: 22.05.2013
(51) Int. Cl.: H04W 72/04

(54) **METHOD, BASE STATION AND USER EQUIPMENT FOR UPLINK CONTROL INFORMATION FEEDBACK**

(30) Priority: 31.08.2012 CN 201210316796
(71) Applicant: Huawei Technologies Co., Ltd., Longgang District Shenzhen, Guangdong 518129 (CN)
(72) Inventor: LIANG, Yongming, Shenzhen Guangdong 518129 (CN); ZHANG, Jiayin, Shenzhen Guangdong 518129 (CN); GUO, Yi, Shenzhen Guangdong 518129 (CN); ZENG, Qinghai, Shenzhen Guangdong 518129 (CN)
(74) Representative: Goddar, Heinz J.
(86) International application number: PCT/CN2013/076097
(87) International publication number: WO 2014/032440

(57) **Abstract**

Embodiments of the present invention provide an uplink control information feedback method, a base station, and a user equipment. The method includes: receiving uplink scheduling information of a non-independent small base station; and sending uplink control information (UCI) over a physical uplink shared channel (PUSCH) of the non-independent small base station according to the uplink scheduling information. In the embodiments of the present invention, the user equipment uses the physical uplink shared channel of the small base station to offload traffic from the physical uplink control channel (PUCCH), thereby reducing the load of the physical uplink control channel of the macro base station and reducing the collision probability.

## Description

### CROSS-REFERENCE TO RELATED APPLICATION

This application claims priority to Chinese Patent Application No. 201210316796.2, filed with the Chinese Patent Office on August 31, 2012 and entitled "UPLINK CONTROL INFORMATION FEEDBACK METHOD, BASE STATION, AND USER EQUIPMENT", which is incorporated herein by reference in its entirety.

### TECHNICAL FIELD

Embodiments of the present invention relate to the radio communication field, and in particular, to an uplink control information feedback method, a base station, and a user equipment.

### BACKGROUND

With evolution of communication technologies, the 3^{rd} Generation Partnership Project (3GPP, 3rd Generation Partnership Project) of the cellular communication system has begun the discussion on Release-12. Currently, multiple candidate technical solutions of LTE Release-12 are put forward, of which an enhanced small base station (Small cell) is an important aspect. For example, technologies such as multi-stream aggregation (MSA, Multi-Stream Aggregation), soft cell (Soft-cell), and phantom cell (Phantom cell) all may be applied to radio cells covered by a small base station.

A small base station in an LTE-Release-8/9/10/11 system generally employs a heterogeneous network (HetNet, Heterogeneous Network) mechanism. A cell served by a small base station in the HetNet network, such as a micro cell (Micro cell), a pico cell (Pico cell), and a femto cell (Femto cell), is an independent cell, and, similar to a corresponding base station (a Macro-eNB, a Pico-eNB, or a Femto-eNB, which may be collectively called an MeNB or an eNB), has its own cell-specific (Cell-Specific) control signaling and its own served user equipment (UE, User Equipment). However, the concepts such as MSA, Soft-cell, and Phantom cell put forward in the LTE Release-12 allow independent or non-independent cells, and the independent or non-independent cells may employ a 3.5 GHz LTE-Hi band or a new band such as a band of a new carrier type (NCT, New Carrier Type).

For non-independent small base stations, in the systems such as MSA, Soft-cell, and Phantom cell, the signaling of a macro base station may be used to support the non-independent small base stations. A physical uplink control channel (PUCCH, Physical Uplink Control Channel) can support feedback of uplink control information (UCI, uplink control information). UCI information includes: downlink (DL, Downlink) channel state information (CSI, Channel State Information), including a rank indicator (RI, Rank Indicator), a precoding matrix indicator (PMI, Precoding Matrix Indicator), and a channel quality indicator (CQI, Channel Quality Indicator); index numbers (CC Index) of multiple component carriers (CC, Component Carrier), and positive acknowledgment and negative acknowledgment (ACK/NACK) information of a hybrid automatic repeat request (HARQ, Hybrid Automatic Repeat Request) of downlink data of each CC; UE uplink scheduling request (SR, Scheduling Request) information; and other information, such as interference on the UE, information about the phase of the UE away from the base station. If the PUCCH channel resources are enough, UE may also feed back downlink full channel state information (Full CSI, Full Channel State Information) measured by the UE to a serving base station, where the full channel state information includes all CSI information such as the amplitude, phase, and interference of a time-varying channel.

The existing carrier aggregation (CA, Carrier Aggregation) technology can solve the issue of broader bandwidths required by DL (Downlink, downlink) and UL (Uplink, uplink) access to higher data rates, and support multiple DL CCs and UL CCs in one cell. In an LTE-A system such as an LTE Release-10/11 system, five DL CCs and five UL CCs are applied, and both DL primary component carriers (PCC, Primary Component Carrier) and UL PCCs employ a UE-specific (UE-specific) mechanism, that is, different UEs of the radio cell can be configured as the same DL PCC, or different DL PCCs, or one UL PCC and one or more DL secondary component carriers (SCC, Secondary Component Carrier), or one or more UL SCCs. The UE-Specific DL/UL CCs are good in that the base station can configure the DL/UL CCs for one or more UEs flexibly according to service load statuses of the DL/UL CCs. The 3GPP Release-10/11 specifies that a UE can only feed back information such as CSI, ACK/NACK, and SR of each DL CC over the PUCCH on the UL PCC of the UE. Under the existing CA mechanism, the load of the DL PCC and the UL PCC may increase in the LTE Release-11 or LTE Release-12 system. For example, under a scenario of LTE Release-11 coordinated multi-point transmission (CoMP, Coordinated Multi-Point Transmission) scheme 4, many remote radio heads (RRH, Remote Radio Head) or low power transmit nodes (LPN, Low Power Transmit Node) use the same radio cell identifier (Cell ID) as the macro cell, and accordingly, the PUCCH resources of the UL PCC are congested due to too many UEs brought by the RRH or the LPN. Compared with the LTE Release-8/9/10 system, the LTE Release-11 system has more UEs that require the PUCCH to feed back the UCI. Therefore, the UL PUCCH load is too heavy, resulting in that many UEs lack uplink PUCCH resource blocks (RB, Resource Block) for feeding back the UL UCI information, which deteriorates system performance drastically. When the information such as SR and ACK/NACK is fed back together with the CSI information over the PUCCH, the ACK/NACK has a highest priority level, the SR has the medium priority level, and the CSI has the lowest priority level. When the three conflicts or collides, the ACK/NACK, the SR, and the CSI are handled in descending order of priority levels. Correspondingly, in LTE Release-11 CoMP scheme 4 or an LTE Release-12 system or a system of a higher version, the UCI of multiple DL CCs may collide between different CCs, and the CSI, the SR, and the ACK/NACK of the same CC may also collide with each other. In addition, the priority levels of the ACK/NACK, the SR, and the CSI are ranked in descending order, so it is also necessary to consider how to handle the UCI conflict or collision of the PUCCH in a non-independent small base station scenario.

In this way, plenty of UEs may cause congestion due to deficiency of control channel resources in the UL PCC, for example, the PUCCH may be congested because too many UEs feed back the UL CSI. The same problem may occur in a non-independent small base station scenario such as Soft-cell and Phantom cell. Especially, for a UL PUCCH channel that is used by plenty of UEs to feed back CSI, if the CSI information amount is too large, the PUCCH congestion is more serious. Therefore, it is necessary to find a new uplink channel UCI feedback method to relieve uplink control channel congestion.

### SUMMARY

Embodiments of the present invention provide an uplink control information feedback method, a base station, and a user equipment, which can relieve a problem of uplink control channel congestion, that is, a problem of too heavy load caused by UCI fed back over the PUCCH.

In a first aspect, an uplink control information feedback method is provided, including: receiving uplink scheduling information of a physical uplink shared channel PUSCH of a non-independent small base station; and sending uplink control information UCI over the PUSCH of the non-independent small base station according to the uplink scheduling information.

With reference to the first aspect, in an implementation manner of the first aspect, the receiving uplink scheduling information of a PUSCH of a non-independent small base station includes: receiving the uplink scheduling information, which is sent by the non-independent small base station over an enhanced physical downlink control channel ePDCCH; or receiving the uplink scheduling information sent over a physical downlink control channel PDCCH by a macro base station that is home to the non-independent small base station.

With reference to the first aspect and the foregoing implementation manner, in another implementation manner of the first aspect, before the receiving the uplink scheduling information, which is sent by the non-independent small base station over an ePDCCH, the method further includes: sending a scheduling request SR to the macro base station over a physical uplink control channel PUCCH of the macro base station that is home to the non-independent small base station, so that the macro base station instructs, according to the SR, the non-independent small base station to send the uplink scheduling information over the ePDCCH.

With reference to the first aspect and the foregoing implementation manner, in another implementation manner of the first aspect, before the receiving the uplink scheduling information sent over a PDCCH by a macro base station that is home to the non-independent small base station, the method further includes: sending a scheduling request SR to the macro base station over a physical uplink control channel PUCCH of the macro base station that is home to the non-independent small base station, so that the macro base station sends the uplink scheduling information over the PDCCH according to the SR and notifies the uplink scheduling information to the non-independent small base station.

With reference to the first aspect and the foregoing implementation manner, in another implementation manner of the first aspect, before the sending an SR to the macro base station over a PUCCH of the macro base station that is home to the non-independent small base station, the method further includes: receiving a UCI feedback cycle and a trigger condition that are configured by the macro base station or the non-independent small base station by using higher layer signaling.

With reference to the first aspect and the foregoing implementation manner, in another implementation manner of the first aspect, the sending an SR to the macro base station over a PUCCH of the macro base station that is home to the non-independent small base station includes: sending the SR to the macro base station over the PUCCH of the macro base station when the UCI feedback cycle approaches or arrives.

With reference to the first aspect and the foregoing implementation manner, in another implementation manner of the first aspect, the SR carries indication information, and the indication information is used to instruct the macro base station to instruct, according to the SR, the non-independent small base station to send the uplink scheduling information over the ePDCCH, or the indication information is used to instruct the macro base station to send the uplink scheduling information over the PDCCH according to the SR.

With reference to the first aspect and the foregoing implementation manner, in another implementation manner of the first aspect, before the receiving uplink scheduling information of a PUSCH of a non-independent small base station, the method further includes: receiving an aperiodic UCI feedback indication and a trigger condition that are configured by the non-independent small base station by using higher layer signaling.

In a second aspect, an uplink control information feedback method is provided, where the method is implemented by a non-independent small base station and includes: determining uplink scheduling information carried on a physical uplink shared channel PUSCH of the non-independent small base station and intended for a user equipment; and receiving uplink control information UCI over the PUSCH of the non-independent small base station according to the uplink scheduling information, where the UCI is sent by the user equipment.

With reference to the second aspect, in an implementation manner of the second aspect, the determining uplink scheduling information carried on a PUSCH of the non-independent small base station and intended for a user equipment includes: receiving the uplink scheduling information, which is sent by a macro base station according to a scheduling request of the user equipment, where the macro base station is home to the non-independent small base station.

With reference to the second aspect and the foregoing implementation manner, in another implementation manner of the second aspect, the determining uplink scheduling information carried on a PUSCH of the non-independent small base station and intended for a user equipment includes: receiving a scheduling event notification, which is sent by a macro base station according to a scheduling request of the user equipment, where the macro base station is home to the non-independent small base station; and generating the uplink scheduling information according to the scheduling event notification.

With reference to the second aspect and the foregoing implementation manner, in another implementation manner of the second aspect, after the determining uplink scheduling information carried on a PUSCH of the non-independent small base station and intended for a user equipment, the method further includes: sending the uplink scheduling information to the user equipment over an enhanced physical downlink control channel ePDCCH of the non-independent small base station.

With reference to the second aspect and the foregoing implementation manner, in another implementation manner of the second aspect, before the receiving UCI over the PUSCH of the non-independent small base station according to the uplink scheduling information, where the UCI is sent by the user equipment, the method further includes: configuring a UCI feedback cycle and a trigger condition for the user equipment by using higher layer signaling.

With reference to the second aspect and the foregoing implementation manner, in another implementation manner of the second aspect, before the receiving UCI over the PUSCH of the non-independent small base station according to the uplink scheduling information, where the UCI is sent by the user equipment, the method further includes: configuring an aperiodic UCI feedback indication and a trigger condition for the user equipment by using higher layer signaling.

With reference to the second aspect and the foregoing implementation manner, in another implementation manner of the second aspect, the method further includes: performing downlink resource scheduling for the user equipment according to the UCI; or sending the UCI to the macro base station that is home to the non-independent small base station, so that the macro base station performs downlink resource scheduling for the user equipment according to the UCI.

In a third aspect, an uplink control information feedback method is provided, where the method is implemented by a macro base station and includes: receiving a scheduling request SR, which is sent by a user equipment over a physical uplink control channel PUCCH of the macro base station, where a data transmission service for the user equipment is provided by a non-independent small base station that belongs to the macro base station; determining, according to the SR, uplink scheduling information carried on a physical uplink shared channel PUSCH of the non-independent small base station and intended for the user equipment; and sending the uplink scheduling information to the user equipment over a physical downlink control channel PDCCH of the macro base station, and sending the uplink scheduling information to the non-independent small base station, so that the user equipment sends uplink control information UCI over the PUSCH of the non-independent small base station according to the uplink scheduling information.

With reference to the third aspect, in an implementation manner of the third aspect, before the receiving an SR, which is sent by a user equipment over a PUCCH of the macro base station, the method further includes: configuring a UCI feedback cycle and a trigger condition for the user equipment by using higher layer signaling.

With reference to the third aspect and the foregoing implementation manner, in another implementation manner of the third aspect, the method further includes: receiving the UCI forwarded by the non-independent small base station, and performing downlink scheduling for the user equipment according to the UCI.

In a fourth aspect, an uplink control information feedback method is provided, where the method is implemented by a macro base station and includes: receiving a scheduling request SR, which is sent by a user equipment over a physical uplink control channel PUCCH of the macro base station, where a data transmission service for the user equipment is provided by a non-independent small base station that belongs to the macro base station; and sending, according to the SR, a scheduling event notification to the non-independent small base station that belongs to the macro base station, so that the non-independent small base station sends an uplink grant to the user equipment according to the scheduling event notification and receives uplink control information UCI, which is sent by the user equipment over a physical uplink shared channel PUSCH of the non-independent small base station.

With reference to the fourth aspect, in an implementation manner of the fourth aspect, before the receiving an SR, which is sent by a user equipment over a PUCCH of the macro base station, the method further includes: configuring a UCI feedback cycle and a trigger condition for the user equipment by using higher layer signaling.

With reference to the fourth aspect and the foregoing implementation manner, in another implementation manner of the fourth aspect, the method further includes:
receiving the UCI forwarded by the non-independent small base station, and performing downlink scheduling for the user equipment according to the UCI.

In a fifth aspect, a user equipment is provided, including: a receiving unit, configured to receive uplink scheduling information of a physical uplink shared channel PUSCH of a non-independent small base station; and a sending unit, configured to send uplink control information UCI over the PUSCH of the non-independent small base station according to the uplink scheduling information received by the receiving unit.

With reference to the fifth aspect, in an implementation manner of the fifth aspect, the receiving unit is specifically configured to: receive the uplink scheduling information, which is sent by the non-independent small base station over an enhanced physical downlink control channel ePDCCH; or receive the uplink scheduling information sent over a physical downlink control channel PDCCH by a macro base station that is home to the non-independent small base station.

With reference to the fifth aspect and the foregoing implementation manner, in another implementation manner of the fifth aspect, the sending unit is further configured to send a scheduling request SR to the macro base station over a physical uplink control channel PUCCH of the macro base station that is home to the non-independent small base station, so that the macro base station instructs, according to the SR, the non-independent small base station to send the uplink scheduling information over the ePDCCH.

With reference to the fifth aspect and the foregoing implementation manner, in another implementation manner of the fifth aspect, the sending unit is further configured to send a scheduling request SR to the macro base station over a physical uplink control channel PUCCH of the macro base station that is home to the non-independent small base station, so that the macro base station sends the uplink scheduling information over the PDCCH according to the SR and notifies the uplink scheduling information to the non-independent small base station.

With reference to the fifth aspect and the foregoing implementation manner, in another implementation manner of the fifth aspect, the receiving unit is further configured to receive a UCI feedback cycle and a trigger condition that are configured by the macro base station or the non-independent small base station by using higher layer signaling.

With reference to the fifth aspect and the foregoing implementation manner, in another implementation manner of the fifth aspect, the receiving unit is further configured to receive an aperiodic UCI feedback indication and a trigger condition that are configured by the non-independent small base station by using higher layer signaling.

In a sixth aspect, a non-independent small base station is provided, including: a determining unit, configured to determine uplink scheduling information carried on a physical uplink shared channel PUSCH of the non-independent small base station and intended for a user equipment; and a receiving unit, configured to receive uplink control information UCI over the PUSCH of the non-independent small base station according to the uplink scheduling information determined by the determining unit, where the UCI is sent by the user equipment.

With reference to the sixth aspect, in an implementation manner of the sixth aspect, the determining unit is specifically configured to receive the uplink scheduling information through the receiving unit, which is sent by a macro base station according to a scheduling request of the user equipment, where the macro base station is home to the non-independent small base station.

With reference to the sixth aspect and the foregoing implementation manner, in another implementation manner of the sixth aspect, the determining unit is specifically configured to: receive a scheduling event notification through the receiving unit, which is sent by a macro base station according to a scheduling request of the user equipment, where the macro base station is home to the non-independent small base station; and generate the uplink scheduling information according to the scheduling event notification.

With reference to the sixth aspect and the foregoing implementation manner, in another implementation manner of the sixth aspect, the independent small base station further includes a sending unit, configured to send the uplink scheduling information to the user equipment over an enhanced physical downlink control channel ePDCCH of the non-independent small base station.

In a seventh aspect, a macro base station is provided, including: a receiving unit, configured to receive a scheduling request SR, which is sent by a user equipment over a physical uplink control channel PUCCH of the macro base station, where a data transmission service for the user equipment is provided by a non-independent small base station that belongs to the macro base station; a determining unit, configured to determine, according to the SR received by the receiving unit, uplink scheduling information carried on a physical uplink shared channel PUSCH of the non-independent small base station and intended for the user equipment; and a sending unit, configured to send the uplink scheduling information determined by the determining unit to the user equipment over a physical downlink control channel PDCCH of the macro base station, and send the uplink scheduling information determined by the determining unit to the non-independent small base station, so that the user equipment sends uplink control information UCI over the PUSCH of the non-independent small base station according to the uplink scheduling information.

In an eighth aspect, a macro base station is provided, including: a receiving unit, configured to receive a scheduling request SR, which is sent by a user equipment over a physical uplink control channel PUCCH of the macro base station, where a data transmission service for the user equipment is provided by a non-independent small base station that belongs to the macro base station; and a sending unit, configured to send, according to the SR received by the receiving unit, a scheduling event notification to the non-independent small base station that belongs to the macro base station, so that the non-independent small base station sends an uplink grant to the user equipment according to the scheduling event notification and receives uplink control information UCI, which is sent by the user equipment over a physical uplink shared channel PUSCH of the non-independent small base station.

In the embodiments of the present invention, the user equipment transmits the UCI over a PUSCH of a non-independent small base station, thereby offloading (Offload) PUCCH traffic for the macro base station, reducing the PUCCH load of the macro base station, and reducing the PUCCH load of the macro base station and the collision probability.

### BRIEF DESCRIPTION OF DRAWINGS

To illustrate the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of an example of a scenario suitable for applying an embodiment of the present invention;
FIG. 2 is a flowchart of a UCI feedback method according to an embodiment of the present invention;
FIG. 3 is a flowchart of an uplink control information feedback method according to another embodiment of the present invention;
FIG. 4 is a flowchart of an uplink control information feedback method according to another embodiment of the present invention;
FIG. 5 is a flowchart of an uplink control information feedback method according to another embodiment of the present invention;
FIG. 6 is a schematic flowchart of a CSI feedback process according to an embodiment of the present invention;
FIG. 7 is a schematic flowchart of a CSI feedback process according to another embodiment of the present invention;
FIG. 8 is a schematic flowchart of a CSI feedback process according to another embodiment of the present invention;
FIG 9 is a block diagram of a user equipment according to an embodiment of the present invention;
FIG. 10 is a block diagram of a non-independent small base station according to an embodiment of the present invention;
FIG. 11 is a block diagram of a macro base station according to an embodiment of the present invention;
FIG. 12 is a block diagram of a macro base station according to another embodiment of the present invention;
FIG. 13 is a block diagram of a user equipment according to an embodiment of the present invention;
FIG. 14 is a block diagram of a non-independent small base station according to an embodiment of the present invention;
FIG. 15 is a block diagram of a macro base station according to an embodiment of the present invention; and
FIG. 16 is a block diagram of a macro base station according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

The technical solutions of the present invention are applicable to various communication systems, for example, a Global System of Mobile communication (Global System of Mobile communication, GSM), a Code Division Multiple Access (CDMA, Code Division Multiple Access) system, a Wideband Code Division Multiple Access (WCDMA, Wideband Code Division Multiple Access Wireless) system, a General Packet Radio Service (GPRS, General Packet Radio Service) system, a Long Term Evolution (LTE, Long Term Evolution) system, a future 5^{th} generation mobile cellular communication system, a wireless local area network (WLAN, Wireless Local Area Network), a self-organizing network, a multi-hop network, and so on.

A user equipment (UE, User Equipment) is also known as a mobile phone, a mobile terminal (Mobile Terminal), a mobile user equipment, or the like, and may communicate with one or more core networks through a radio access network (RAN, Radio Access Network). The user equipment may be a mobile terminal, such as a mobile phone (or called a "cellular" phone), or a computer with a mobile terminal, and for example, may be a portable, pocket-sized, handheld, computer built-in, or vehicle-mounted mobile apparatus, which exchanges voice and/or data and/or signaling (Signaling) with a radio access network.

A base station (BS, Base-station) may be a base station (BTS, Base Transceiver Station) in a GSM or CDMA system, or a base station (NodeB) in a WCDMA system, or an evolved base station (eNB or e-NodeB, evolutional NodeB) in an LTE system, or an access point (AP, Access Point) in a WLAN system, which is not limited in the present invention.

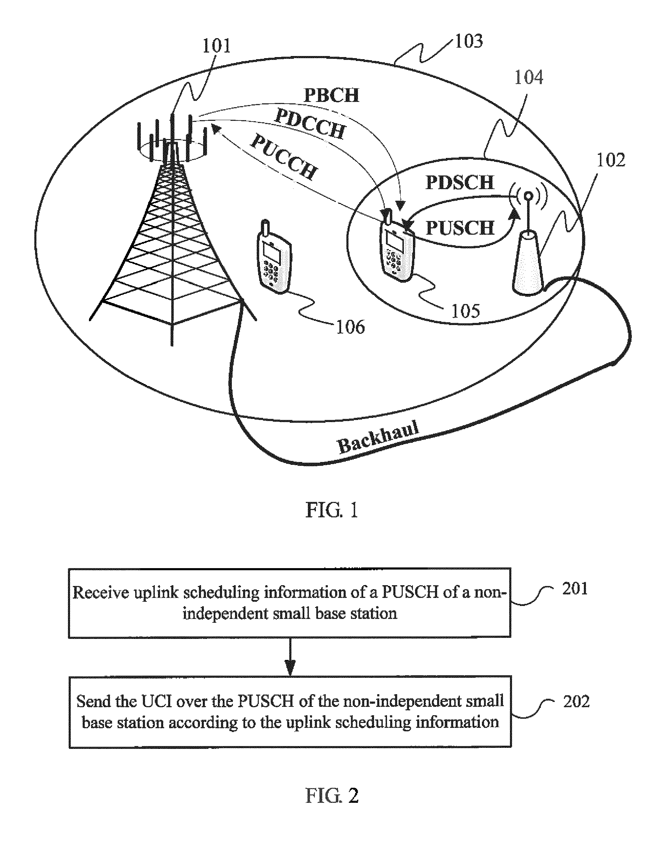

FIG. 1 is a schematic diagram of an example of a scenario suitable for applying an embodiment of the present invention. The communication system 100 in FIG. 1 includes a macro base station 101 and a small base station 102.

The coverage 104 of the small base station 102 is within the coverage 103 of the macro base station 101. The macro base station 101 exchanges data and/or signaling with the small base station 102 through a backhaul connection (Backhaul). The backhaul may be a wired connection such as a fiber connection, a coaxial connection, or a network cable connection; or may be a wireless connection such as a millisecond wave connection or a microwave connection. The backhaul between the macro base station 101 and the small base station 102 may be implemented by an X2 interface or a newly defined X3 interface. The specific implementation form of the backhaul is not limited in the embodiment of the present invention.

The implementation form of the small base station 102 is not limited in the embodiment of the present invention. For example, the small base station may be a micro base station (Micro), a pico base station (pico), a femto base station (Femto), a low power node (LPN, Low Power Node), a remote radio head (RRH, Remote Radio Head), or the like. The spectrum of the small base station may be a licensed (Licensed) spectrum, for example, an NCT band of 3.5 GHz or above, or one or more SCCs of an LTE-A system; or may be an unlicensed (Unlicensed) spectrum, for example, a wireless fidelity (WiFi, Wireless Fidelity) band below 700 MHz, a 2.4 GHz Industrial Scientific Medical (ISM, Industrial Scientific Medical) band, a 5 GHz WiFi band, a 60 GHz wireless gigabit (WiGig, Wireless Gigabit) band, or the like; or may even be a white spectrum in the television industry or a licensed shared access (LSA, Licensed Shared Access) spectrum of a cognitive radio (CR, Cognitive Radio) system.

In FIG. 1, the UE 105 is a terminal that is covered by both the macro base station 101 and the small base station 102, and the UE 106 is a terminal covered by only the macro base station 101. For example, the UE 105 may be a UE in an LTE Release-12 system, and the UE 106 may be a UE in an LTE Release-10/11 system. In the following embodiments, it is assumed that the UE 105 uses the PUSCH of the small base station 102 to transmit data.

The small base station 102 is a non-independent small base station that belongs to the macro base station 101, and provides no complete signaling support. In other words, the small base station 102 lacks UL and/or DL PCC, and the corresponding signaling support depends on the corresponding PCC of the macro base station 101. For example, if the small base station 102 has no independent UL PCC, uplink control information of the small base station 102 needs to be transmitted over a PUCCH on the UL PCC of the macro base station 101. In this case, if the number of UEs covered by the small base station 102 of the UE 105 is too large or if the UE uses too many CCs, the UCI load of the macro base station will be too heavy so that the PUCCH channel of the macro base station 101 will be congested or blocked, which leads to decrease of performance of the entire system and decrease of user experience.

Specifically, as shown in FIG. 1, the macro base station 101 provides the UE 105 with signaling services of the PUCCH, the PDCCH, a physical broadcast channel (PBCH, Physical Broadcast Channel), and so on. The small base station 102 provides the UE 105 with data transmission services of the physical downlink shared channel (PDSCH, Physical Downlink Share Channel), the PUSCH, and so on.

In addition, in most cases, the non-independent small base station 102 and the macro base station 101 have the same cell ID, which, however, shall not be construed as a limitation to the embodiment of the present invention. The embodiment of the present invention is also applicable to a case where the macro base station 101 and the non-independent small base station 102 have different cell IDs.

The existing LTE-Release-8/9/10/11 system involves no scenario of a non-independent small base station. In the existing HetNet scenario, both the Pico cell and the Femto cell are independent cells, and the independent cells have their own UL PCC.

FIG. 2 is a flowchart of a UCI feedback method according to an embodiment of the present invention. The method in FIG. 2 is performed by a UE (such as the UE 105 in FIG. 1).

201. Receive uplink scheduling information of a PUSCH of a non-independent small base station.

An example of the non-independent small base station is the small base station 102 shown in FIG. 1. The uplink scheduling information may include an uplink grant (UL Grant), an index number of a corresponding uplink component carrier (UL CC), and other relevant information.

202. Send UCI over the PUSCH of the non-independent small base station according to the uplink scheduling information.

The UCI may include: CSI, which includes an RI, a PMI, and a CQI; ACK/NACK of multiple CCs; uplink SR information of the UE; and other information such as interference on the UE, and full channel state information.

In the embodiment of the present invention, the user equipment transmits the UCI over a PUSCH of a non-independent small base station, thereby offloading PUCCH traffic for the macro base station, reducing the PUCCH load of the macro base station, and reducing the PUCCH load of the macro base station and the collision probability.

Essentially, because a system of LTE Release-12 and above versions is capable of separating a control plane (CP, Control-plane) from a user plane (UP, User-plane), that is, the macro base station provides the UE with layer-1/layer-2 (L1/L2) broadcast channel (PBCH) system information (SI, System Information) and other signaling and layer-3 signaling (RRC signaling), and the small base station provides the UE with DL/UL data. In this way, the data offloading of the small base station is implemented, the signaling function of the small base station is simplified, and therefore the deployment cost of the small base station is reduced.

In addition, the PUSCH of the small base station is relatively close to the UE and is generally an indoor channel, which is characterized by good channel environments. Therefore, the transmission capability of the PUSCH of the small base station is generally high, and the embodiment of the present invention can take full advantage of the offloading performance of the small base station and improve information throughput of the small base station.

In addition, the measurement mechanism of the CSI is not limited in the embodiment of the present invention. In fact, if the UE is covered by both the macro base station and the small base station, because frame structures of the macro base station and the small base station have their respective reference signal (RS, Reference Signal) information, and the RS of the small base station may have a low density in the frame structure, where the small base station may also design the RS as a CRS (Cell-Specific RS, cell-specific reference signal) and a URS (UE-Specific RS, UE-specific reference signal) according to the number of users, the UE can measure the RS of the macro base station and the small base station simultaneously to obtain their respective DL CSI. In principle, because the PUCCH load status of the macro cell varies with the number of covered UEs while the small base station has no PUCCH, the PUSCH of the small base station can be used flexibly to offload the UCI (such as CSI and ACK/NACK) of the macro base station and/or the small base station according to the UE data and the PUCCH load status of the macro cell. Minimally, because the small base station has smaller coverage and a better channel environment than the macro base station, the required DL CSI feedback cycle of the small base station is generally not too short. Therefore, as regards the CSI of the small base station, feeding back the DL UCI of the small base station over the PUSCH of the small base station should not affect downlink resource scheduling and downlink performance of the small base station.

In addition, when the UE transmits the UCI over the PUSCH of the small base station, the required power is lower than the power for transmitting the UCI over the PUCCH of the macro base station. Therefore, the power of the UE is saved, thereby prolonging the battery life of the UE.

The embodiment of the present invention is also backward-compatible with the LTE Release-10/11 standard, that is, an independent small base station may be applied to offload the UCI in an LTE Release-10/11 system.

Optionally, in an embodiment, in step 201, the UE may receive the uplink scheduling information from the macro base station (such as the macro base station 101 shown in FIG. 1) that is home to the non-independent small base station. In other words, in this case, the uplink scheduling information is generated and sent by the macro base station, and the non-independent small base station is generally not capable of performing uplink scheduling. The macro base station may send the uplink scheduling information to the UE over the PDCCH.

In this embodiment, the macro base station performs uplink resource scheduling for the small base station, which brings an advantage that an uplink inter-cell interference coordination (ICIC, Inter-cell Interference Coordination) mechanism is applied between the macro base station and the small base station. In this case, the macro base station manages and schedules uplink time-and-frequency resource blocks (RB, Resource Block) of the macro base station and the small base station uniformly, and therefore, resource scheduling methods such as frequency-division multiplexing (FDM, Frequency-Division Multiplexing) and fractional frequency reuse (FFC, Fractional Frequency Reuse) may be applied in the time domain and/or the frequency domain to relieve or eliminate uplink co-channel interference or adjacent-channel interference that possibly occurs in the macro base station or the small base station. For example, the macro base station uses a 100 MHz UL band from 3.5 GHz to 3.6 GHz and a 100 MHz DL band from 3.6 GHz to 3.7 GHz, and a frequency division duplexing (FDD, Frequency Division Duplexing) manner is applied for UL and DL of the macro base station; and the small base station uses a 100 MHz UL/DL band from 3.7 GHz to 3.8 GHz, and a time division duplexing (TDD, Time Division Duplexing) manner is applied for UL and DL of the small base station. In this case, signaling and/or data on the 3.6 GHz to 3.7 GHz DL band of the macro base station will cause adjacent-channel interference onto signaling and/or data on the 3.7 GHz to 3.8 GHz UL band of the small base station. In this case, the macro base station can manage and schedule the uplink resources of the macro base station and the small base station uniformly to relieve or avoid the adjacent-channel interference.

Optionally, in another embodiment, in step 201, the UE may receive the uplink scheduling information from the non-independent small base station. In other words, in this case, the uplink scheduling information is generated and sent by the non-independent small base station. The non-independent small base station may send the uplink scheduling information to the UE on its enhanced PDCCH (ePDCCH, enhanced PDCCH). In this case, the non-independent small base station needs to have an uplink scheduling capability.

Optionally, in an embodiment, the UCI sent over the PUSCH of the non-independent small base station may be periodical UCI or aperiodic UCI.

If the UCI is aperiodic UCI, the non-independent small base station may configure an aperiodic UCI feedback indication and a trigger condition for the UE by using higher layer signaling when the non-independent small base station wants the UE to feed back the UCI. The higher layer signaling may be radio resource control (RRC, Radio Resource Control) signaling. In this case, in step 201, the UE may receive the RRC signaling, which is sent by the non-independent small base station over the PDSCH, where the RRC signaling includes uplink scheduling information. In addition, the higher layer signaling may also be sent by the macro base station to the UE over the PDSCH of the macro base station directly, and the RRC signaling includes the uplink scheduling information.

If the UCI is periodic UCI, the UE may use a Fake SR (fake SR) mechanism to request the network side to send the uplink scheduling information. The Fake SR is used to instruct the macro base station to instruct, according to the SR, the non-independent small base station to send the uplink scheduling information over the ePDCCH, or is used to instruct the macro base station to send the uplink scheduling information over the PDCCH according to the SR. Under this mechanism, the UE sends an SR to the macro base station over a PUCCH of the macro base station that is home to the non-independent small base station. Optionally, the SR may carry indication information used to indicate that the SR is a Fake SR. For example, a 1-bit information element in the SR carries the indication information, where the information element may be an idle bit or a reserved bit in the SR, or an existing information element in the SR is reused, which is not limited in the embodiment of the present invention. Optionally, in another embodiment, the Fake SR may be the same as an ordinary SR. Because the macro base station can know the data transmission service provided by the non-independent small base station for the UE, the macro base station may understand the SR as a Fake SR when receiving the SR from such a UE over the PUCCH.

Optionally, in an embodiment, the UE may send the SR to the macro base station over the PUCCH of the macro base station that is home to the non-independent small base station, so that the macro base station instructs, according to the SR, the non-independent small base station to send the uplink scheduling information over the ePDCCH. In this case, the non-independent small base station has an uplink scheduling capability, and generates the uplink scheduling information and sends the uplink scheduling information to the UE. Specifically, the macro base station may send a scheduling event notification to the non-independent small base station through a backhaul, so as to trigger the non-independent small base station to perform uplink scheduling. The specific form of the scheduling event notification is not limited in the embodiment of the present invention, and existing signaling may be reused or new signaling may be added. Optionally, the scheduling event notification may occupy only a 1-bit information element.

Optionally, in another embodiment, the UE covered by the non-independent small base station may send the SR to the macro base station over the PUCCH of the macro base station, so that the macro base station sends the uplink scheduling information over the PDCCH according to the SR and notifies the uplink scheduling information to the non-independent small base station. In this case, no matter whether the non-independent small base station has an uplink scheduling capability, the macro base station performs the uplink scheduling and notifies the uplink scheduling information to the UE and the non-independent small base station respectively. For example, the macro base station may send the uplink scheduling information to the UE over the PDCCH, and send the uplink scheduling information to the non-independent small base station through the backhaul. The specific manner of notifying the uplink scheduling information by the macro base station to the non-independent small base station is not limited in the embodiment of the present invention, and existing signaling may be reused or new signaling may be added.

Optionally, in an embodiment, the UE may first receive a UCI feedback cycle and a trigger condition that are configured by the macro base station or the non-independent small base station by using higher layer signaling (such as RRC signaling). Optionally, the UE sends the SR to the macro base station over the PUCCH of the macro base station when the UCI feedback cycle approaches or arrives.

In the embodiment of the present invention, the user equipment transmits the UCI over a PUSCH of a non-independent small base station, thereby offloading PUCCH traffic for the macro base station, reducing the PUCCH load of the macro base station, and reducing the PUCCH load of the macro base station and the collision probability.

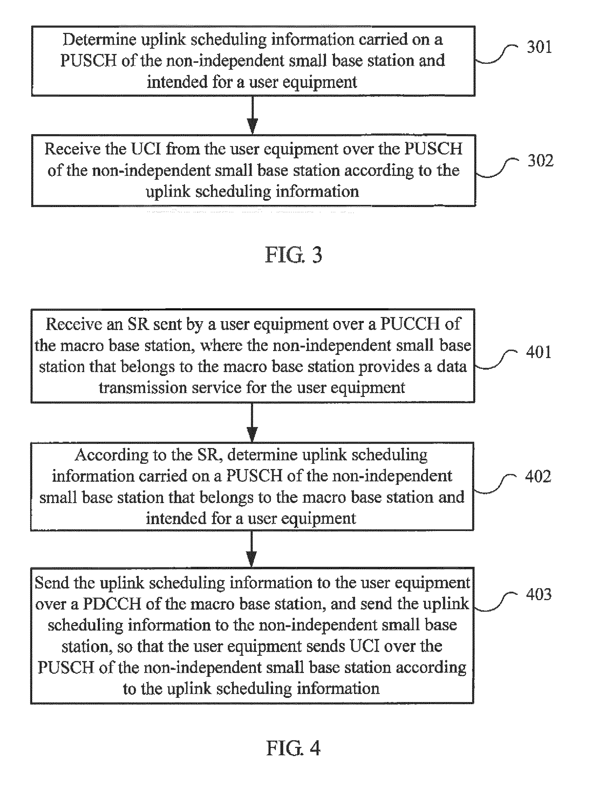

FIG. 3 is a flowchart of an uplink control information feedback method according to another embodiment of the present invention. The method in FIG. 3 is implemented by a non-independent small base station (such as the small base station 102 shown in FIG. 1), and corresponds to the method in FIG. 2, and therefore, repeated description will be omitted properly.

301. Determine uplink scheduling information carried on a PUSCH of the non-independent small base station and intended for a user equipment.

Optionally, in an embodiment, in step 301, the non-independent small base station may generate the uplink scheduling information by itself. For example, when wanting the UE to perform aperiodic UCI feedback, the non-independent small base station may use higher layer signaling (such as RRC signaling) to configure an aperiodic UCI feedback indication and a trigger condition for the user equipment, and then the non-independent small base station generates uplink scheduling information and sends the generated uplink scheduling information to the UE over the ePDCCH.

Optionally, in an embodiment, in step 301, the non-independent small base station may receive the uplink scheduling information sent according to an SR of the user equipment by the macro base station that is home to the non-independent small base station. For example, the SR sent by the UE may be the Fake SR, and the macro base station generates the uplink scheduling information according to the Fake SR, and sends the uplink scheduling information to the non-independent small base station. In this case, no limitation is placed on whether the non-independent small base station has an uplink scheduling capability.

Optionally, in another embodiment, in step 301, the non-independent small base station may receive a scheduling event notification sent according to an SR of the user equipment by the macro base station that is home to the non-independent small base station, and generate the uplink scheduling information according to the scheduling event notification. In this case, the non-independent small base station needs to have an uplink scheduling capability. Optionally, the non-independent small base station may send the uplink scheduling information to the user equipment over the ePDCCH.

302. Receive the UCI from the user equipment over the PUSCH of the non-independent small base station according to the uplink scheduling information.

The UCI may include: CSI, which includes an RI, a PMI, and a CQI; ACK/NACK of multiple CCs; uplink SR information of the UE; and other information such as interference on the UE.

In the embodiment of the present invention, the user equipment transmits the UCI over a PUSCH of a non-independent small base station, thereby offloading PUCCH traffic for the macro base station, reducing the PUCCH load of the macro base station, and reducing the PUCCH load of the macro base station and the collision probability.

In addition, the transmission capability of the PUSCH of the small base station is generally high, and the embodiment of the present invention can take full advantage of the offloading performance of the small base station and improve information throughput.

In addition, when the UE transmits the UCI over the PUSCH of the small base station, the required power is lower than the power for transmitting the UCI over the PUCCH of the macro base station. Therefore, the power of the UE is saved.

The embodiment of the present invention is also backward-compatible with the LTE Release-10/11 standard.

Optionally, in an embodiment, if the UCI is periodic UCI, the non-independent small base station may configure a UCI feedback cycle and a trigger condition for the user equipment by using higher layer signaling.

Optionally, in another embodiment, if the UCI is aperiodic UCI, the non-independent small base station may configure an aperiodic UCI feedback indication and a trigger condition for the user equipment by using higher layer signaling.

Optionally, in another embodiment, the non-independent small base station may perform downlink resource scheduling for the user equipment according to the UCI received in step 302. In this case, the non-independent small base station needs to have a downlink scheduling capability. Alternatively, in another embodiment, the non-independent small base station may further send UCI to the macro base station, so that the macro base station performs downlink resource scheduling for the user equipment according to the UCI.

FIG. 4 is a flowchart of an uplink control information feedback method according to another embodiment of the present invention. The method in FIG. 4 is performed by a macro base station (such as the macro base station 101 in FIG. 1).

401. Receive an SR, which is sent by a user equipment over a PUCCH of the macro base station, where the non-independent small base station (such as the small base station 102 shown in FIG. 1) that belongs to the macro base station provides a data transmission service for the user equipment.

The SR received in step 401 may be called a Fake SR. Optionally, the SR may carry indication information used to indicate that the SR is a Fake SR. For example, a 1-bit information element in the SR carries the indication information, where the information element may be an idle bit or a reserved bit in the SR, or an existing information element in the SR is reused, which is not limited in the embodiment of the present invention. Optionally, in another embodiment, the Fake SR may be the same as an ordinary SR. Because the macro base station can know the data transmission service provided by the non-independent small base station for the UE, the macro base station may understand the SR as a Fake SR when receiving the SR from such a UE over the PUCCH.

402. Determine, according to the SR, uplink scheduling information carried on a PUSCH of the non-independent small base station that belongs to the macro base station and intended for the user equipment.

The uplink scheduling information may include a UL Grant, a corresponding resource index, and other relevant information.

403. Send the uplink scheduling information to the user equipment over a PDCCH of the macro base station, and send the uplink scheduling information to the non-independent small base station, so that the user equipment sends UCI over the PUSCH of the non-independent small base station according to the uplink scheduling information.

For example, the macro base station may send the uplink scheduling information to the non-independent small base station through a backhaul. The specific manner of notifying the uplink scheduling information by the macro base station to the non-independent small base station is not limited in the embodiment of the present invention, and existing signaling may be reused or new signaling may be added.

In the embodiment of the present invention, the user equipment transmits the UCI over a PUSCH of a non-independent small base station, thereby offloading PUCCH traffic for the macro base station, reducing the PUCCH load of the macro base station, and reducing the PUCCH load of the macro base station and the collision probability.

Optionally, in an embodiment, the macro base station may configure a UCI feedback cycle and a trigger condition for the user equipment by using higher layer signaling (such as RRC signaling).

Optionally, in another embodiment, the macro base station may receive the UCI forwarded by the non-independent small base station; and perform downlink scheduling for the user equipment according to the UCI.

The transmission capability of the PUSCH of the small base station is generally high, and the embodiment of the present invention can take full advantage of the offloading performance of the small base station and improve information throughput.

In addition, when the UE transmits the UCI over the PUSCH of the small base station, the required power is lower than the power for transmitting the UCI over the PUCCH of the macro base station. Therefore, the power of the UE is saved.

The embodiment of the present invention is also backward-compatible with the LTE Release 10/11 standard.

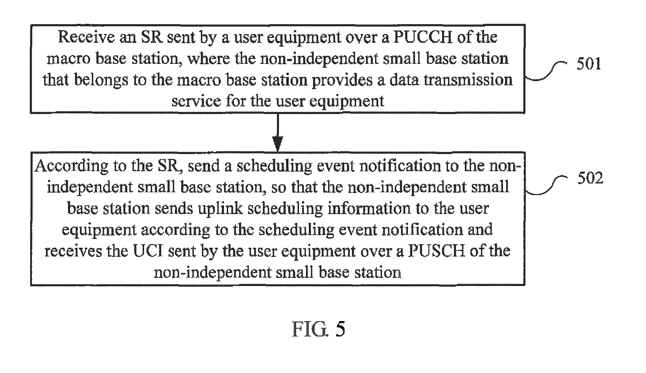

FIG. 5 is a flowchart of an uplink control information feedback method according to another embodiment of the present invention. The method in FIG. 5 is performed by a macro base station (such as the macro base station 101 in FIG. 1).

501. Receive an SR, which is sent by a user equipment over a PUCCH of the macro base station. The non-independent small base station (such as the small base station 102 shown in FIG. 1) that belongs to the macro base station provides a data transmission service for the user equipment.

The SR received in step 501 may be called a Fake SR. Optionally, the SR may carry indication information used to indicate that the SR is a Fake SR. For example, a 1-bit information element in the SR carries the indication information, where the information element may be an idle bit or a reserved bit in the SR, or an existing information element in the SR is reused, which is not limited in the embodiment of the present invention. Optionally, in another embodiment, the Fake SR may be the same as an ordinary SR. Because the macro base station can know the data transmission service provided by the non-independent small base station for the UE, the macro base station may understand the SR as a Fake SR when receiving the SR from such a UE over the PUCCH.

502. Send, according to the SR, a scheduling event notification to the non-independent small base station that belongs to the macro base station, so that the non-independent small base station sends uplink scheduling information to the user equipment according to the scheduling event notification and receives the UCI, which is sent by the user equipment over a PUSCH of the non-independent small base station.

In the embodiment of the present invention, the user equipment transmits the UCI over a PUSCH of a non-independent small base station, thereby offloading PUCCH traffic for the macro base station, reducing the PUCCH load of the macro base station, and reducing the PUCCH load of the macro base station and the collision probability.

Optionally, in an embodiment, the macro base station may configure a UCI feedback cycle and a trigger condition for the user equipment by using higher layer signaling (such as RRC signaling).

Optionally, in another embodiment, the macro base station may receive the UCI forwarded by the non-independent small base station; and perform downlink scheduling for the user equipment according to the UCI.

The transmission capability of the PUSCH of the small base station is generally high, and the embodiment of the present invention can take full advantage of the offloading performance of the small base station and improve information throughput.

In addition, when the UE transmits the UCI over the PUSCH of the small base station, the required power is lower than the power for transmitting the UCI over the PUCCH of the macro base station. Therefore, the power of the UE is saved.

The embodiment of the present invention is also backward-compatible with the LTE Release-10/11 standard.

The following describes the embodiments of the present invention in more detail with reference to specific examples. In the following embodiments, it is assumed that the CSI is fed back. However, the embodiments of the present invention are not limited to thereto, and are also applicable to other types of UCI in a similar way.

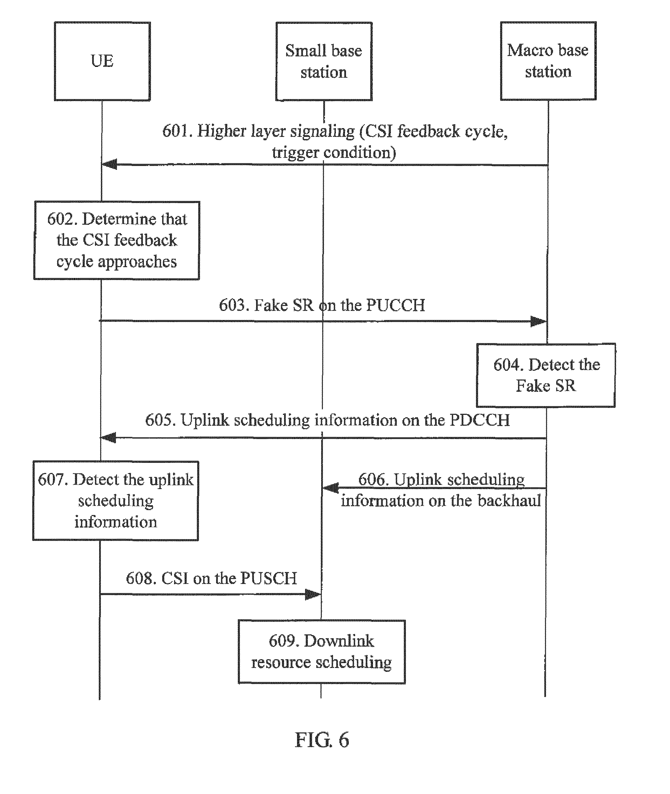

FIG. 6 is a schematic flowchart of a CSI feedback process according to an embodiment of the present invention. In the embodiment in FIG. 6, the CSI is sent periodically. An example of the macro base station is the macro base station 101 shown in FIG. 1, an example of the small base station is the small base station 102 shown in FIG. 1, and an example of the UE is the UE 105 shown in FIG. 1.

601. The macro base station configures a CSI feedback cycle and a trigger condition for the UE by using higher layer signaling.

Step 601 may also be performed by the small base station.

602. The UE determines whether the CSI feedback cycle approaches.

603. When the CSI feedback cycle approaches or arrives and the CSI trigger condition is fulfilled, the UE sends a Fake SR to the macro base station over the PUCCH channel of the macro base station.

For example, the UE may send a Fake SR at preset time before arrival of the feedback cycle.

604. The macro base station receives and detects the SR over the PUCCH.

The Fake SR may carry specific indication information used to indicate that the SR is a Fake SR; or, the fake SR may be the same as an ordinary SR, and the macro base station determines that the SR is a Fake SR sent by the UE served by the small base station.

605. The macro base station sends uplink scheduling information (such as a UL Grant and an index of the corresponding UL CC) to the UE over the PDCCH.

In this embodiment, the macro base station performs uplink scheduling according to the SR. In this case, the macro base station needs to know the PUSCH resource information of the small base station beforehand, for example, the applied UL CC number. The macro base station performs uplink scheduling in the PUSCH resource supported by the small base station.

606. The macro base station sends the uplink scheduling information to the small base station through a backhaul.

The backhaul between macro base station and the small base station may be wired or wireless, which is not limited in the embodiment of the present invention.

607. The UE receives and detects the uplink scheduling information sent by the macro base station.

In this way, the UE can determine the corresponding PUSCH resource used to send the periodic CSI.

608. The UE sends the CSI information over the PUSCH of the small base station.

609. The small base station performs downlink resource scheduling according to the CSI.

If the small base station is capable of performing downlink scheduling, the small base station may directly perfonn downlink resource scheduling for the UE according to the CSI. Otherwise, the small base station forwards the CSI to the macro base station through the backhaul or a radio air interface, and the macro base station performs downlink resource scheduling for the UE according to the CSI.

In this embodiment, the UE uses a Fake SR to trigger the macro base station to allocate uplink scheduling information, and transmits the UCI over the PUSCH of the non-independent small base station, thereby using the data channel of the small base station to offload the control channel traffic for the macro base station, reducing the PUCCH load of the macro base station, and relieving the PUCCH congestion problem of the macro base station.

In the embodiment in FIG. 6, the small base station does not need to have the uplink scheduling capability, and the embodiment is applicable to more scenarios. In addition, a majority of the UCI information is transmitted over the PUSCH of the small base station. Because the PUSCH of the small base station requires lower power and provides a higher speed, the power of the UE is saved and the throughput of the UE is improved.

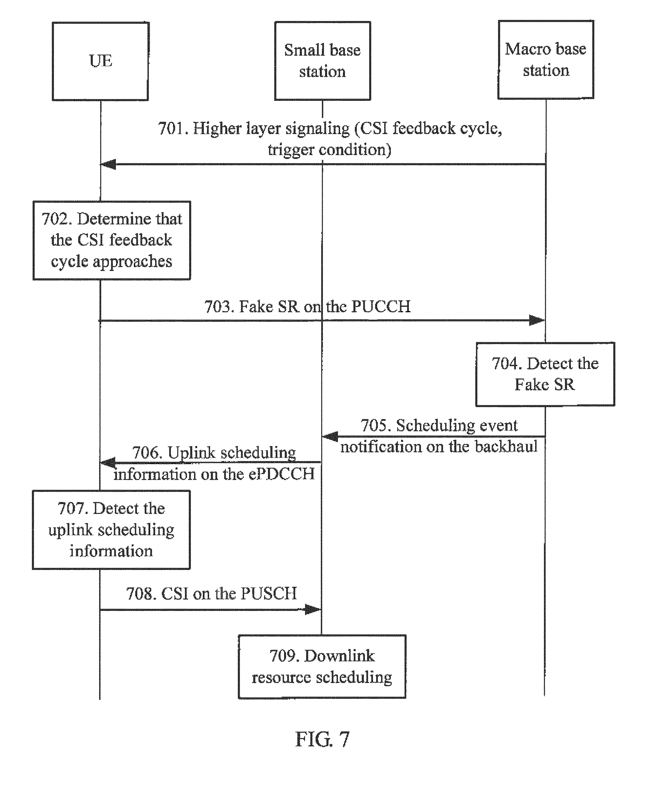

FIG. 7 is a schematic flowchart of a CSI feedback process according to another embodiment of the present invention. In the embodiment in FIG. 7, the CSI is sent periodically. An example of the macro base station is the macro base station 101 shown in FIG. 1, an example of the small base station is the small base station 102 shown in FIG. 1, and an example of the UE is the UE 105 shown in FIG. 1.

701. The macro base station configures a CSI feedback cycle and a trigger condition for the UE by using higher layer signaling.

Step 701 may also be performed by the small base station.

702. The UE determines whether the CSI feedback cycle approaches.

703. When the CSI feedback cycle approaches or arrives, the UE sends a Fake SR to the macro base station over the PUCCH channel of the macro base station.

For example, the UE may send a Fake SR at preset time before arrival of the feedback cycle.

704. The macro base station receives and detects the SR over the PUCCH.

The Fake SR may carry specific indication information used to indicate that the SR is a Fake SR; or, the fake SR may be the same as an ordinary SR, and the macro base station determines that the SR is a Fake SR sent by the UE served by the small base station.

705. The macro base station sends a scheduling event notification to the small base station through a backhaul, so as to instruct the small base station to get ready for resource scheduling.

The backhaul between macro base station and the small base station may be wired or wireless, which is not limited in the embodiment of the present invention.

706. The small base station sends the uplink scheduling information to the UE over the PDCCH.

In this embodiment, the small base station performs uplink scheduling according to the SR. In this case, the small base station needs to have an uplink scheduling capability.

707. The UE receives and detects the uplink scheduling information sent by the small base station.

708. The UE sends the CSI information over the PUSCH of the small base station.

709. The small base station performs downlink resource scheduling according to the CSI.

If the small base station is capable of performing downlink scheduling, the small base station may directly perform downlink resource scheduling for the UE according to the CSI. Otherwise, the small base station forwards the CSI to the macro base station through the backhaul or even an air interface, and the macro base station performs downlink resource scheduling for the UE according to the CSI.

In this embodiment, the UE uses a Fake SR to trigger the macro base station to allocate downlink scheduling information, and transmits the UCI over the PUSCH of the non-independent small base station, thereby using the data channel of the small base station to offload the control channel traffic for the macro base station, reducing the PUCCH load of the macro base station, and relieving the PUCCH congestion problem of the macro base station.

In the embodiment in FIG. 7, a majority of the UCI information is transmitted over the PUSCH of the small base station. Because the PUSCH of the small base station requires lower power and provides a higher speed, the power of the UE is saved and the throughput of the UE is improved.

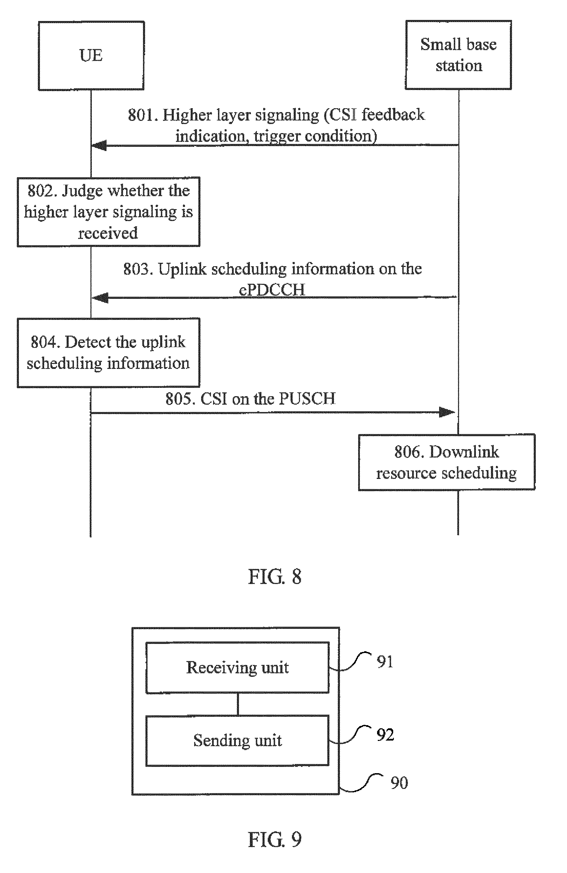

FIG. 8 is a schematic flowchart of a CSI feedback process according to another embodiment of the present invention. In the embodiment in FIG. 7, the CSI is sent aperiodically. An example of the macro base station is the macro base station 101 shown in FIG. 1, an example of the small base station is the small base station 102 shown in FIG. 1, and an example of the UE is the UE 105 shown in FIG. 1.

801. The small base station configures an aperiodic CSI feedback indication and a trigger condition for the UE by using higher layer signaling.

802. The UE determines whether the higher layer signaling is received, and, if yes, obtain the corresponding trigger condition.

803. The small base station sends the uplink scheduling information to the UE over the ePDCCH.

804. The UE receives and detects the uplink scheduling information.

805. The UE sends the aperiodic CSI over the PUSCH of the small base station.

806. The small base station performs downlink resource scheduling according to the CSI.

In this embodiment, the UE transmits the UCI over the PUSCH of the non-independent small base station, thereby using the data channel of the small base station to offload the control channel traffic for the macro base station, reducing the PUCCH load of the macro base station, and relieving the PUCCH congestion problem of the macro base station.

In the embodiment in FIG. 8, a majority of the UCI information is transmitted over the PUSCH of the small base station. Because the PUSCH of the small base station requires lower power and provides a higher speed, the power of the UE is saved and the throughput of the UE is improved.

In conclusion, although the foregoing embodiments describe in detail the problem how to feed back the UCI in a scenario that the macro base station and the non-independent small base station cover the UE jointly, the embodiments of the present invention do not exclude a scenario of an independent small base station. If the UE is close to an independent small base station, the PUSCH of the independent small base station, instead of the PUCCH of the macro base station, is used to feed back the UCI, which can also bring similar excellent performance. Similarly, the embodiments of the present invention do not exclude a scenario that the UE is covered by a small base station alone while not covered by a macro base station. In this scenario, although the UE cannot send the Fake SR information to the macro base station over the PUCCH of the macro base station directly, the small base station can use higher layer RRC signaling to configure how the UE will feed back the UCI, and the UE feeds back, according to the configured parameter, the UCI information over the PUSCH of the small base station. Therefore, the embodiments of the present invention are still applicable to the scenario that the UE is covered by the small base station alone while not covered by the macro base station, the details of which are not given herein any further.

FIG. 9 is a block diagram of a user equipment according to an embodiment of the present invention. An example of the user equipment 90 in FIG. 9 is the UE 105 shown in FIG. 1, which includes a receiving unit 91 and a sending unit 92.

The receiving unit 91 receives uplink scheduling information of a PUSCH of a non-independent small base station. The sending unit 92 sends UCI over the PUSCH of the non-independent small base station according to the uplink scheduling information received by the receiving unit 91.

In the embodiment of the present invention, the user equipment transmits the UCI over a PUSCH of a non-independent small base station, thereby offloading PUCCH traffic for the macro base station, reducing the PUCCH load of the macro base station, and reducing the PUCCH load of the macro base station and the collision probability.

The user equipment 90 can implement each process of the method in FIG 2. To avoid repetition, no more details are given herein any further.

Optionally, in an embodiment, the receiving unit 91 may receive the uplink scheduling information, which is sent by the non-independent small base station over an enhanced physical downlink control channel ePDCCH; or receive the uplink scheduling information sent over a physical downlink control channel PDCCH by a macro base station that is home to the non-independent small base station.

Optionally, in another embodiment, the sending unit 92 may further send a scheduling request SR to the macro base station over the physical uplink control channel PUCCH of the macro base station that is home to the non-independent small base station, so that the macro base station instructs, according to the SR, the non-independent small base station to send the uplink scheduling information over the ePDCCH.

Optionally, in another embodiment, the sending unit 92 may further send a scheduling request SR to the macro base station over the physical uplink control channel PUCCH of the macro base station that is home to the non-independent small base station, so that the macro base station sends the uplink scheduling information over the PDCCH according to the SR and notifies the uplink scheduling information to the non-independent small base station.

Optionally, in another embodiment, the receiving unit 91 may further receive a UCI feedback cycle and a trigger condition that are configured by the macro base station or the non-independent small base station by using higher layer signaling.

Optionally, in another embodiment, the sending unit 92 may send the SR to the macro base station over the PUCCH of the macro base station when the UCI feedback cycle approaches or arrives.

Optionally, in another embodiment, the SR may carry indication information, and the indication information is used to instruct the macro base station to instruct, according to the SR, the non-independent small base station to send the uplink scheduling information over the ePDCCH, or is used to instruct the macro base station to send the uplink scheduling information over the PDCCH according to the SR, that is, the indication information is used to indicate that the SR is a Fake SR.

Optionally, in another embodiment, the receiving unit 91 may further receive an aperiodic UCI feedback indication and a trigger condition that are configured by the non-independent small base station by using higher layer signaling.

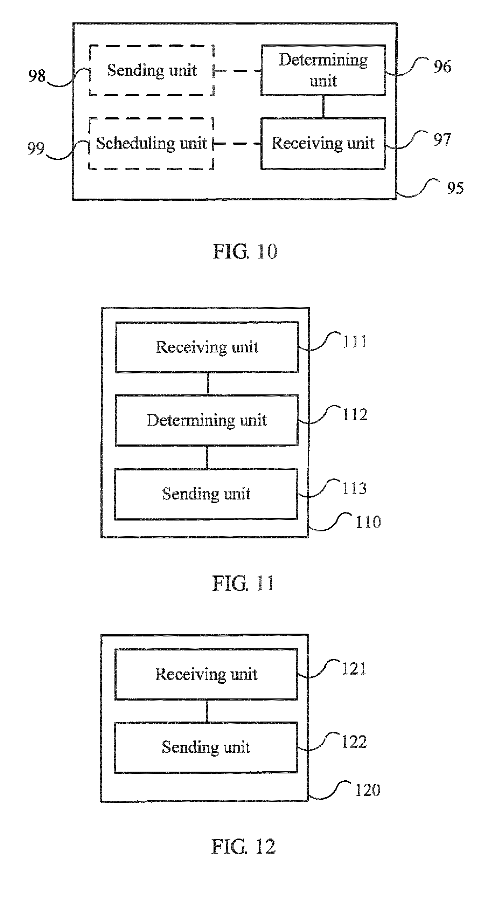

FIG. 10 is a block diagram of a non-independent small base station according to an embodiment of the present invention. An example of the non-independent small base station 95 in FIG. 10 is the small base station 102 shown in FIG. 1, which includes a determining unit 96 and a receiving unit 97.

The determining unit 96 determines uplink scheduling information carried on a PUSCH of the non-independent small base station and intended for a user equipment. The receiving unit 97 receives UCI from the user equipment over the PUSCH of the non-independent small base station according to the uplink scheduling information determined by the determining unit 96.

In the embodiment of the present invention, the user equipment transmits the UCI over a PUSCH of a non-independent small base station, thereby offloading PUCCH traffic for the macro base station, reducing the PUCCH load of the macro base station, and reducing the PUCCH load of the macro base station and the collision probability.

The non-independent small base station 95 can implement each process of the method in FIG 3. To avoid repetition, no more details are given herein any further.

Optionally, in an embodiment, the determining unit 96 may receive the uplink scheduling information through the receiving unit 97, which is sent by a macro base station according to a scheduling request of the user equipment, where the macro base station is home to the non-independent small base station.

Optionally, in another embodiment, the determining unit 96 may receive a scheduling event notification through the receiving unit 97, which is sent by a macro base station according to a scheduling request of the user equipment, where the macro base station is home to the non-independent small base station, and generate uplink scheduling information according to the scheduling event notification.

Optionally, in another embodiment, the non-independent small base station 95 may further include a sending unit 98, configured to send the uplink scheduling information to the user equipment over the ePDCCH of the non-independent small base station.

Optionally, in another embodiment, the sending unit 98 may send a UCI feedback cycle and a trigger condition to the user equipment by using higher layer signaling, or configure an aperiodic UCI feedback indication and a trigger condition for the user equipment by using the higher layer signaling.

Optionally, in another embodiment, the non-independent small base station 95 may further include a scheduling unit 99, configured to perform downlink resource scheduling for the user equipment according to the UCI.

Optionally, in another embodiment, the sending unit 98 may send UCI to the macro base station that is home to the non-independent small base station, so that the macro base station performs downlink resource scheduling for the user equipment according to the UCI.

In the embodiment of the present invention, the user equipment transmits the UCI over a PUSCH of a non-independent small base station, thereby offloading PUCCH traffic for the macro base station, reducing the PUCCH load of the macro base station, and reducing the PUCCH load of the macro base station and the collision probability.

FIG. 11 is a block diagram of a macro base station according to an embodiment of the present invention. An example of the macro base station 110 in FIG. 11 is the macro base station 101 shown in FIG. 1, which includes a receiving unit 111, a determining unit 112, and a sending unit 113.

The receiving unit 111 receives an SR, which is sent by a user equipment over a PUCCH of the macro base station, where a data transmission service for the user equipment is provided by a non-independent small base station that belongs to the macro base station.

The determining unit 112 determines, according to the SR received by the receiving unit 111, uplink scheduling information carried on a PUSCH of the non-independent small base station and intended for the user equipment.

The sending unit 113 sends the uplink scheduling information determined by the determining unit 112 to the user equipment over a physical downlink control channel PDCCH of the macro base station, and sends the uplink scheduling information determined by the determining unit 112 to the non-independent small base station, so that the user equipment sends channel state information UCI over the PUSCH of the non-independent small base station according to the uplink scheduling information.

In the embodiment of the present invention, the user equipment transmits the UCI over a PUSCH of a non-independent small base station, thereby offloading PUCCH traffic for the macro base station, reducing the PUCCH load of the macro base station, and reducing the PUCCH load of the macro base station and the collision probability.

Optionally, in an embodiment, the sending unit 113 may further send a UCI feedback cycle and a trigger condition to the user equipment by using higher layer signaling.

Optionally, in another embodiment, the receiving unit 111 may further receive the UCI forwarded by the non-independent small base station, so as to perform downlink scheduling for the user equipment according to the UCI.

FIG. 12 is a block diagram of a macro base station according to another embodiment of the present invention. An example of the macro base station 120 in FIG 12 is the macro base station 101 shown in FIG. 1, which includes a receiving unit 121 and a sending unit 122.

The receiving unit 121 receives an SR, which is sent by a user equipment over a PUCCH of the macro base station, where a data transmission service for the user equipment is provided by a non-independent small base station that belongs to the macro base station.

The sending unit 122 sends, according to the SR received by the receiving unit 121, a scheduling event notification to the non-independent small base station that belongs to the macro base station, so that the non-independent small base station sends an uplink grant to the user equipment according to the scheduling event notification and receives UCI, which is sent by the user equipment over a PUSCH of the non-independent small base station.

In the embodiment of the present invention, the user equipment transmits the UCI over a PUSCH of a non-independent small base station, thereby offloading PUCCH traffic for the macro base station, reducing the PUCCH load of the macro base station, and reducing the PUCCH load of the macro base station and the collision probability.

Optionally, in an embodiment, the sending unit 122 may further send a UCI feedback cycle and a trigger condition to the user equipment by using higher layer signaling.

Optionally, in another embodiment, the receiving unit 121 may further receive the UCI forwarded by the non-independent small base station, so as to perform downlink scheduling for the user equipment according to the UCI.

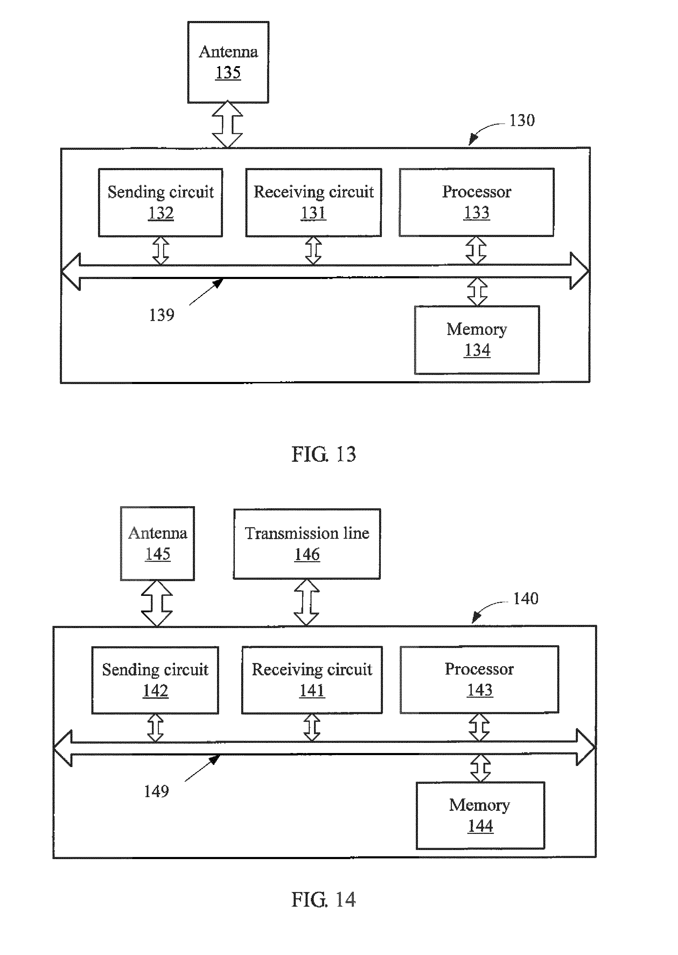

FIG. 13 is a block diagram of a user equipment according to an embodiment of the present invention. An example of the user equipment 130 in FIG. 13 is the UE 105 shown in FIG. 1, which includes a receiving circuit 131 and a sending circuit 132.

The receiving circuit 131 receives uplink scheduling information of a PUSCH of a non-independent small base station. The sending circuit 132 sends UCI over the PUSCH of the non-independent small base station according to the uplink scheduling information received by the receiving circuit 131.

In the embodiment of the present invention, the user equipment transmits the UCI over a PUSCH of a non-independent small base station, thereby offloading PUCCH traffic for the macro base station, reducing the PUCCH load of the macro base station, and reducing the PUCCH load of the macro base station and the collision probability.

The receiving circuit 131 is connected to the sending circuit 132 through a bus system 139. In addition, the user equipment 130 may further include an antenna 135. In a practical application, the receiving circuit 131 and the sending circuit 132 may be coupled to the antenna 135. All components of the user equipment 130 are coupled together through the bus system 139, where the bus system 139 includes not only a data bus, but also a power supply bus, a control bus, a state signal bus, and so on. However, for clarity, all kinds of buses are uniformly called a bus system 139 in FIG. 13.

The user equipment 130 may further include a processor 133 and a memory 134. The memory 134 stores instructions for instructing the processor 133 to perform various operations, and data required for performing various operations. The processor 133 controls operations of the user equipment 130, and the processor 133 may also be called a CPU (Central Processing Unit, central processing unit). The memory 134 may include a read-only memory and a random access memory, and provide instructions and data for the processor 133. A part of the memory 134 may further include a non-volatile random access memory (NVRAM). The receiving circuit 131 and the sending circuit 132 may perform the method of the embodiments of the present invention under control of the processor 133.

In the implementation process, the steps of the method may be implemented by integrated logic circuits of hardware in the processor 133 or implemented under control of software instructions. The processor 133 may be a universal processor, a digital signal processor (DSP), an application-specific integrated circuit (ASIC), a field programmable gate array (FPGA) or another programmable logical device, a stand-alone gate or a transistor logic device, or a stand-alone hardware device. It can implement or execute the methods, steps and logical block diagrams disclosed in the embodiments of the present invention. The universal processor may be a microprocessor or any conventional processor. The steps of the method disclosed in the embodiments of the present invention may be executed by a hardware decoder directly, or by a combination of hardware and software modules in the decoder. The software module may be located in a random access memory, a flash memory, a read-only memory, a programmable read-only memory, an electrically erasable programmable ROM, a register, or any other storage media that are mature in the art. The storage media are located in the memory 134, and the processor 133 reads information from the memory 134, and works together with its hardware to implement the steps of the method.

Optionally, in an embodiment, the receiving circuit 131 may receive the uplink scheduling information, which is sent by the non-independent small base station over an enhanced physical downlink control channel ePDCCH; or receive the uplink scheduling information sent over a physical downlink control channel PDCCH by a macro base station that is home to the non-independent small base station.

Optionally, in another embodiment, the sending circuit 132 may further send a scheduling request SR to the macro base station over the physical uplink control channel PUCCH of the macro base station that is home to the non-independent small base station, so that the macro base station instructs, according to the SR, the non-independent small base station to send the uplink scheduling information over the ePDCCH.

Optionally, in another embodiment, the sending circuit 132 may further send a scheduling request SR to the macro base station over the physical uplink control channel PUCCH of the macro base station that is home to the non-independent small base station, so that the macro base station sends the uplink scheduling information over the PDCCH according to the SR and notifies the uplink scheduling information to the non-independent small base station.

Optionally, in another embodiment, the receiving circuit 131 may further receive a UCI feedback cycle and a trigger condition that are configured by the macro base station or the non-independent small base station by using higher layer signaling.

Optionally, in another embodiment, the sending circuit 132 may send the SR to the macro base station over the PUCCH of the macro base station when the UCI feedback cycle approaches or arrives.

Optionally, in another embodiment, the SR may carry indication information, and the indication information is used to instruct the macro base station to instruct, according to the SR, the non-independent small base station to send the uplink scheduling information over the ePDCCH, or is used to instruct the macro base station to send the uplink scheduling information over the PDCCH according to the SR, that is, the indication information is used to indicate that the SR is a Fake SR.

Optionally, in another embodiment, the receiving circuit 131 may further receive an aperiodic UCI feedback indication and a trigger condition that are configured by the non-independent small base station by using higher layer signaling.

FIG. 14 is a block diagram of a non-independent small base station according to an embodiment of the present invention. An example of the non-independent small base station 140 in FIG. 14 is the small base station 102 shown in FIG. 1, which includes a receiving circuit 141, a processor 143, and a memory 144.

The memory 144 stores instructions for instructing the processor 143 to determine uplink scheduling information carried on a PUSCH of the non-independent small base station and intended for the user equipment. The receiving circuit 141 receives UCI from the user equipment over the PUSCH of the non-independent small base station according to the uplink scheduling information determined by the processor 143.

In the embodiment of the present invention, the user equipment transmits the UCI over a PUSCH of a non-independent small base station, thereby offloading PUCCH traffic for the macro base station, reducing the PUCCH load of the macro base station, and reducing the PUCCH load of the macro base station and the collision probability.

The non-independent small base station 140 may further include a sending circuit 142. In addition, the non-independent small base station 140 may further include an antenna 145 and a transmission line 146. In a practical application, the receiving circuit 141 and the sending circuit 142 may be coupled to the antenna 145 or the transmission line 146. The transmission line 146 is used to implement a wired connection to other network side devices, such as a wired backhaul connection. However, the non-independent small base station 140 may also implement a wireless backhaul connection by using an antenna 145.

All components of the non-independent small base station 140 are coupled together through the bus system 149, where the bus system 149 includes not only a data bus, but also a power supply bus, a control bus, a state signal bus, and so on. However, for clarity, all kinds of buses are uniformly called a bus system 149 in FIG. 14.

The memory 144 stores instructions for instructing the processor 143 to perform various operations, and data required for performing various operations. The processor 143 controls operations of the non-independent small base station 140, and the processor 143 may also be called a CPU (Central Processing Unit, central processing unit). The memory 144 may include a read-only memory and a random access memory, and provide instructions and data for the processor 143. A part of the memory 144 may include a non-volatile random access memory (NVRAM). The receiving circuit 141 and the sending circuit 142 may perform the method of the embodiment of the present invention under control of the processor 143.

In the implementation process, the steps of the method may be implemented by integrated logic circuits of hardware in the processor 143 or implemented under control of software instructions. The processor 143 may be a universal processor, a digital signal processor (DSP), an application-specific integrated circuit (ASIC), a field programmable gate array (FPGA) or another programmable logical device, a stand-alone gate or a transistor logic device, or a stand-alone hardware device. It can implement or execute the methods, steps and logical block diagrams disclosed in the embodiments of the present invention. The universal processor may be a microprocessor or any conventional processor. The steps of the method disclosed in the embodiments of the present invention may be executed by a hardware decoder directly, or by a combination of hardware and software modules in the decoder. The software modules may be located in a random access memory, a flash memory, a read-only memory, a programmable read-only memory, an electrically erasable programmable ROM, a register, or any other storage media that are mature in the art. The storage media are located in the memory 144, and the processor 143 reads information from the memory 144, and works together with its hardware to implement the steps of the method.

Optionally, in an embodiment, the receiving circuit 141 may receive the uplink scheduling information, which is sent by a macro base station according to a scheduling request of the user equipment, where the macro base station is home to the non-independent small base station.

Optionally, in another embodiment, the processor 143 may receive a scheduling event notification through the receiving unit 141, which is sent by a macro base station according to a scheduling request of the user equipment, where the macro base station is home to the non-independent small base station, and generate uplink scheduling information according to the scheduling event notification.

Optionally, in another embodiment, the sending circuit 142 may send the uplink scheduling information to the user equipment over the ePDCCH of the non-independent small base station.

Optionally, in another embodiment, the sending circuit 142 may send a UCI feedback cycle and a trigger condition to the user equipment by using higher layer signaling, or configure an aperiodic UCI feedback indication and a trigger condition for the user equipment by using the higher layer signaling.

Optionally, in another embodiment, the processor 143 may further perform downlink resource scheduling for the user equipment according to the UCI.

Optionally, in another embodiment, the sending circuit 142 may send UCI to the macro base station that is home to the non-independent small base station, so that the macro base station performs downlink resource scheduling for the user equipment according to the UCI.

In the embodiment of the present invention, the user equipment transmits the UCI over a PUSCH of a non-independent small base station, thereby offloading PUCCH traffic for the macro base station, reducing the PUCCH load of the macro base station, and reducing the PUCCH load of the macro base station and the collision probability.

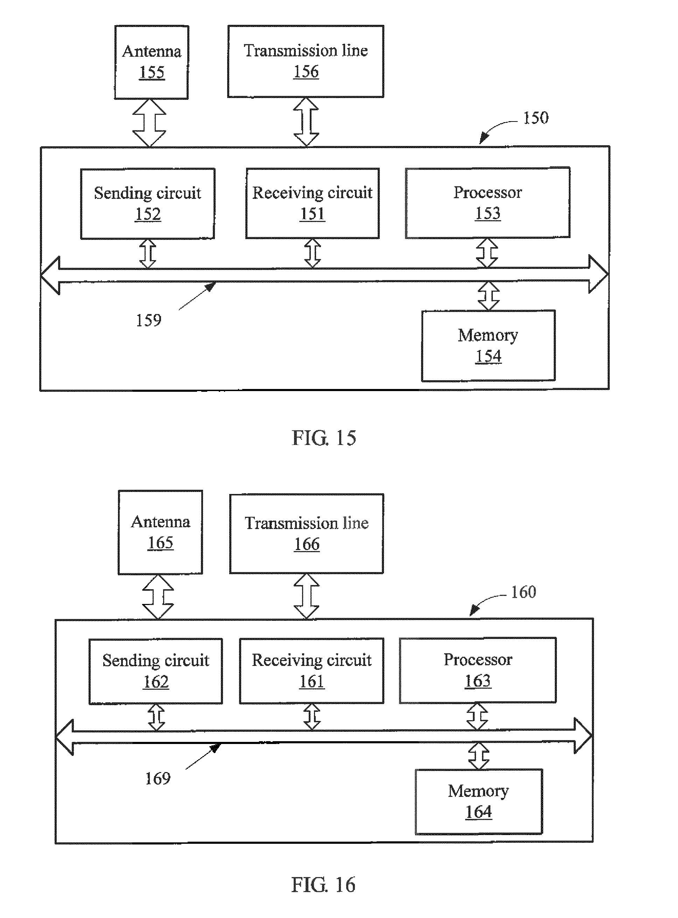

FIG. 15 is a block diagram of a macro base station according to an embodiment of the present invention. An example of the macro base station 150 in FIG. 15 is the macro base station 101 shown in FIG. 1, which includes a receiving circuit 151, a sending circuit 152, a processor 153, and a memory 154.

The receiving circuit 151 receives an SR, which is sent by a user equipment over a PUCCH of the macro base station, where a data transmission service for the user equipment is provided by a non-independent small base station that belongs to the macro base station.

The memory 154 stores instructions for instructing the processor 153 to determine, according to the SR received by the receiving circuit 151, uplink scheduling information carried on a PUSCH of the non-independent small base station and intended for a user equipment.

The sending circuit 152 sends the uplink scheduling information determined by the processor 153 to the user equipment over a physical downlink control channel PDCCH of the macro base station 150, and sends the uplink scheduling information determined by the processor 153 to the non-independent small base station, so that the user equipment sends channel state information UCI over the PUSCH of the non-independent small base station according to the uplink scheduling information.

In the embodiment of the present invention, the user equipment transmits the UCI over a PUSCH of a non-independent small base station, thereby offloading PUCCH traffic for the macro base station, reducing the PUCCH load of the macro base station, and reducing the PUCCH load of the macro base station and the collision probability.

In addition, the macro base station 150 may further include an antenna 155 and a transmission line 156. In a practical application, the receiving circuit 151 and the sending circuit 152 may be coupled to the antenna 155 or the transmission line 156. The transmission line 156 is used to implement a wired connection to other network side devices, such as a wired backhaul connection. However, the macro base station 150 may also implement a wireless backhaul connection by using an antenna 155.

All components of the macro base station 150 are coupled together through the bus system 159, where the bus system 159 includes not only a data bus, but also a power supply bus, a control bus, a state signal bus, and so on. However, for clarity, all kinds of buses are uniformly called a bus system 159 in FIG. 15.

The memory 154 stores instructions for instructing the processor 153 to perform various operations, and data required for performing various operations. The processor 153 controls operations of the macro base station 150, and the processor 153 may also be called a CPU (Central Processing Unit, central processing unit). The memory 154 may include a read-only memory and a random access memory, and provide instructions and data for the processor 153. A part of the memory 154 may include a non-volatile random access memory (NVRAM). The receiving circuit 151 and the sending circuit 152 may perform the method of the embodiment of the present invention under control of the processor 153.

In the implementation process, the steps of the method may be implemented by integrated logic circuits of hardware in the processor 153 or implemented under control of software instructions. The processor 153 may be a universal processor, a digital signal processor (DSP), an application-specific integrated circuit (ASIC), a field programmable gate array (FPGA) or another programmable logical device, a stand-alone gate or a transistor logic device, or a stand-alone hardware device. It can implement or execute the methods, steps and logical block diagrams disclosed in the embodiments of the present invention. The universal processor may be a microprocessor or any conventional processor. The steps of the method disclosed in the embodiments of the present invention may be executed by a hardware decoder directly, or by a combination of hardware and software modules in the decoder. The software modules may be located in a random access memory, a flash memory, a read-only memory, a programmable read-only memory, an electrically erasable programmable ROM, a register, or any other storage media that are mature in the art. The storage media are located in the memory 154, and the processor 153 reads information from the memory 154, and works together with its hardware to implement the steps of the method.

Optionally, in an embodiment, the sending circuit 152 may further send a UCI feedback cycle and a trigger condition to the user equipment by using higher layer signaling.

Optionally, in another embodiment, the receiving circuit 151 may further receive the UCI forwarded by the non-independent small base station, so as to perform downlink scheduling for the user equipment according to the UCI.

FIG. 16 is a block diagram of a macro base station according to another embodiment of the present invention. An example of the macro base station 160 in FIG. 16 is the macro base station 101 shown in FIG. 1, which includes a receiving circuit 161 and a sending circuit 162.

The receiving circuit 161 receives an SR, which is sent by a user equipment over a PUCCH of the macro base station, where a data transmission service for the user equipment is provided by a non-independent small base station that belongs to the macro base station.

The sending circuit 162 sends, according to the SR received by the receiving circuit 161, a scheduling event notification to the non-independent small base station that belongs to the macro base station, so that the non-independent small base station sends an uplink grant to the user equipment according to the scheduling event notification and receives UCI, which is sent by the user equipment over a PUSCH of the non-independent small base station.

In the embodiment of the present invention, the user equipment transmits the UCI over a PUSCH of a non-independent small base station, thereby offloading PUCCH traffic for the macro base station, reducing the PUCCH load of the macro base station, and reducing the PUCCH load of the macro base station and the collision probability.

In addition, the macro base station 160 may further include an antenna 165 and a transmission line 166. In a practical application, the receiving circuit 161 and the sending circuit 162 may be coupled to the antenna 165 or the transmission line 166. The transmission line 166 is used to implement a wired connection to other network side devices, such as a wired backhaul connection. However, the macro base station 160 may also implement a wireless backhaul connection by using an antenna 165.

All components of the macro base station 160 are coupled together through the bus system 169, where the bus system 169 includes not only a data bus, but also a power supply bus, a control bus, a state signal bus, and so on. However, for clarity, all kinds of buses are uniformly called a bus system 169 in FIG. 16.

The macro base station 160 further includes a processor 163 and a memory 164. The memory 164 stores instructions for instructing the processor 163 to perform various operations, and data required for performing various operations. The processor 163 controls operations of the macro base station 160, and the processor 163 may also be called a CPU (Central Processing Unit, central processing unit). The memory 164 may include a read-only memory and a random access memory, and provide instructions and data for the processor 163. A part of the memory 164 may include a non-volatile random access memory (NVRAM). The receiving circuit 161 and the sending circuit 162 may perform the method of the embodiment of the present invention under control of the processor 163.

In the implementation process, the steps of the method may be implemented by integrated logic circuits of hardware in the processor 163 or implemented under control of software instructions. The processor 163 may be a universal processor, a digital signal processor (DSP), an application-specific integrated circuit (ASIC), a field programmable gate array (FPGA) or another programmable logical device, a stand-alone gate or a transistor logic device, or a stand-alone hardware device. It can implement or execute the methods, steps and logical block diagrams disclosed in the embodiments of the present invention. The universal processor may be a microprocessor or any conventional processor. The steps of the method disclosed in the embodiments of the present invention may be executed by a hardware decoder directly, or by a combination of hardware and software modules in the decoder. The software modules may be located in a random access memory, a flash memory, a read-only memory, a programmable read-only memory, an electrically erasable programmable ROM, a register, or any other storage media that are mature in the art. The storage media are located in the memory 164, and the processor 163 reads information from the memory 164, and works together with its hardware to implement the steps of the method.

Optionally, in an embodiment, the sending circuit 162 may further send a UCI feedback cycle and a trigger condition to the user equipment by using higher layer signaling.

Optionally, in another embodiment, the receiving circuit 161 may further receive the UCI forwarded by the non-independent small base station, so as to perform downlink scheduling for the user equipment according to the UCI.

A person of ordinary skill in the art may be aware that, in combination with the examples described in the embodiments disclosed in this specification, units and algorithm steps may be implemented by electronic hardware, or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to the corresponding process in the foregoing method embodiments, and the details will not be described herein again.

In the several embodiments provided in the present application, it should be understood that the disclosed system, apparatus, and method may be implemented in other manners. For example, the described apparatus embodiments are merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The computer software product is stored in a storage medium, and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An uplink control information feedback method, comprising:
receiving uplink scheduling information of a physical uplink shared channel PUSCH of a non-independent small base station; and
sending uplink control information UCI over the PUSCH of the non-independent small base station according to the uplink scheduling information.

2. The method according to claim 1, wherein the receiving uplink scheduling information of a PUSCH of a non-independent small base station comprises:
receiving the uplink scheduling information, which is sent by the non-independent small base station over an enhanced physical downlink control channel ePDCCH; or
receiving the uplink scheduling information sent over a physical downlink control channel PDCCH by a macro base station that is home to the non-independent small base station.

3. The method according to claim 2, wherein: before the receiving the uplink scheduling information, which is sent by the non-independent small base station over an ePDCCH, the method further comprises:
sending a scheduling request SR to the macro base station over a physical uplink control channel PUCCH of the macro base station that is home to the non-independent small base station, so that the macro base station instructs, according to the SR, the non-independent small base station to send the uplink scheduling information over the ePDCCH.

4. The method according to claim 2, wherein: before the receiving the uplink scheduling information sent over a PDCCH by a macro base station that is home to the non-independent small base station, the method further comprises:
sending a scheduling request SR to the macro base station over a physical uplink control channel PUCCH of the macro base station that is home to the non-independent small base station, so that the macro base station sends the uplink scheduling information over the PDCCH according to the SR and notifies the uplink scheduling information to the non-independent small base station.

5. The method according to claim 3 or 4, wherein: before the sending an SR to the macro base station over a PUCCH of the macro base station that is home to the non-independent small base station, the method further comprises:
receiving a UCI feedback cycle and a trigger condition that are configured by the macro base station or the non-independent small base station by using higher layer signaling,
wherein the sending an SR to the macro base station over a PUCCH of the macro base station that is home to the non-independent small base station comprises:
sending the SR to the macro base station over the PUCCH of the macro base station when the UCI feedback cycle approaches or arrives.

6. The method according to claim 3 or 4, wherein: the SR carries indication information, and the indication information is used to instruct the macro base station to instruct, according to the SR, the non-independent small base station to send the uplink scheduling information over the ePDCCH, or the indication information is used to instruct the macro base station to send the uplink scheduling information over the PDCCH according to the SR.

7. An uplink control information feedback method, wherein the method is implemented by a non-independent small base station and comprises:
determining uplink scheduling information carried on a physical uplink shared channel PUSCH of the non-independent small base station and intended for a user equipment; and
receiving uplink control information UCI over the PUSCH of the non-independent small base station according to the uplink scheduling information, wherein the UCI is sent by the user equipment.

8. The method according to claim 7, wherein the determining uplink scheduling information carried on a PUSCH of the non-independent small base station and intended for a user equipment comprises:
receiving the uplink scheduling information, which is sent by a macro base station according to a scheduling request of the user equipment, wherein the macro base station is home to the non-independent small base station.

9. The method according to claim 7, wherein the determining uplink scheduling information carried on a PUSCH of the non-independent small base station and intended for a user equipment comprises:
receiving a scheduling event notification, which is sent by a macro base station according to a scheduling request of the user equipment, wherein the macro base station is home to the non-independent small base station; and
generating the uplink scheduling information according to the scheduling event notification.

10. The method according to claim 9, wherein: after the determining uplink scheduling information carried on a PUSCH of the non-independent small base station and intended for a user equipment, the method further comprises:
sending the uplink scheduling information to the user equipment over an enhanced physical downlink control channel ePDCCH of the non-independent small base station.

11. The method according to any one of claims 8 to 10, wherein: before the receiving UCI over the PUSCH of the non-independent small base station according to the uplink scheduling information, wherein the UCI is sent by the user equipment, the method further comprises:
configuring a UCI feedback cycle and a trigger condition for the user equipment by using higher layer signaling.

12. The method according to claim 7, wherein: before the receiving UCI over the PUSCH of the non-independent small base station according to the uplink scheduling information, wherein the UCI is sent by the user equipment, the method further comprises:
configuring an aperiodic UCI feedback indication and a trigger condition for the user equipment by using higher layer signaling.

13. The method according to any one of claims 7 to 12, further comprising:
performing downlink resource scheduling for the user equipment according to the UCI; or
sending the UCI to the macro base station that is home to the non-independent small base station, so that the macro base station performs downlink resource scheduling for the user equipment according to the UCI.

14. An uplink control information feedback method, wherein the method is implemented by a macro base station and comprises:
receiving a scheduling request SR, which is sent by a user equipment over a physical uplink control channel PUCCH of the macro base station, wherein a data transmission service for the user equipment is provided by a non-independent small base station that belongs to the macro base station;
determining, according to the SR, uplink scheduling information carried on a physical uplink shared channel PUSCH of the non-independent small base station and intended for the user equipment; and
sending the uplink scheduling information to the user equipment over a physical downlink control channel PDCCH of the macro base station, and sending the uplink scheduling information to the non-independent small base station, so that the user equipment sends uplink control information UCI over the PUSCH of the non-independent small base station according to the uplink scheduling information.

15. The method according to claim 14, wherein: before the receiving an SR, which is sent by a user equipment over a PUCCH of the macro base station, the method further comprises:
configuring a UCI feedback cycle and a trigger condition for the user equipment by using higher layer signaling.

16. The method according to claim 14 or 15, further comprising:
receiving the UCI forwarded by the non-independent small base station, and performing downlink scheduling for the user equipment according to the UCI.

17. An uplink control information feedback method, wherein the method is implemented by a macro base station and comprises:
receiving a scheduling request SR, which is sent by a user equipment over a physical uplink control channel PUCCH of the macro base station, wherein a data transmission service for the user equipment is provided by a non-independent small base station that belongs to the macro base station; and
sending, according to the SR, a scheduling event notification to the non-independent small base station that belongs to the macro base station, so that the non-independent small base station sends an uplink grant to the user equipment according to the scheduling event notification and receives uplink control information UCI, which is sent by the user equipment over a physical uplink shared channel PUSCH of the non-independent small base station.

18. The method according to claim 17, wherein: before the receiving an SR, which is sent by a user equipment over a PUCCH of the macro base station, the method further comprises:
configuring a UCI feedback cycle and a trigger condition for the user equipment by using higher layer signaling.

19. The method according to claim 17 or 18, further comprising:
receiving the UCI forwarded by the non-independent small base station, and performing downlink scheduling for the user equipment according to the UCI.

20. A user equipment, comprising:
a receiving unit, configured to receive uplink scheduling information of a physical uplink shared channel PUSCH of a non-independent small base station; and
a sending unit, configured to send uplink control information UCI over the PUSCH of the non-independent small base station according to the uplink scheduling information received by the receiving unit.

21. The user equipment according to claim 20, wherein the receiving unit is specifically configured to: receive the uplink scheduling information, which is sent by the non-independent small base station over an enhanced physical downlink control channel ePDCCH; or receive the uplink scheduling information sent over a physical downlink control channel PDCCH by a macro base station that is home to the non-independent small base station.

22. The user equipment according to claim 21, wherein the sending unit is further configured to send a scheduling request SR to the macro base station over a physical uplink control channel PUCCH of the macro base station that is home to the non-independent small base station, so that the macro base station instructs, according to the SR, the non-independent small base station to send the uplink scheduling information over the ePDCCH.

23. The user equipment according to claim 21, wherein the sending unit is further configured to send a scheduling request SR to the macro base station over a physical uplink control channel PUCCH of the macro base station that is home to the non-independent small base station, so that the macro base station sends the uplink scheduling information over the PDCCH according to the SR and notifies the uplink scheduling information to the non-independent small base station.

24. The user equipment according to claim 22 or 23, wherein the receiving unit is further configured to receive a UCI feedback cycle and a trigger condition that are configured by the macro base station or the non-independent small base station by using higher layer signaling.

25. The user equipment according to claim 20, wherein the receiving unit is further configured to receive an aperiodic UCI feedback indication and a trigger condition that are configured by the non-independent small base station by using higher layer signaling.

26. A non-independent small base station, comprising:
a determining unit, configured to determine uplink scheduling information carried on a physical uplink shared channel PUSCH of the non-independent small base station and intended for a user equipment; and
a receiving unit, configured to receive uplink control information UCI over the PUSCH of the non-independent small base station according to the uplink scheduling information determined by the determining unit, wherein the UCI is sent by the user equipment.

27. The non-independent small base station according to claim 26, wherein the determining unit is specifically configured to receive the uplink scheduling information through the receiving unit, which is sent by a macro base station according to a scheduling request of the user equipment, wherein the macro base station is home to the non-independent small base station.

28. The non-independent small base station according to claim 26, wherein the determining unit is specifically configured to: receive a scheduling event notification through the receiving unit, which is sent by a macro base station according to a scheduling request of the user equipment, wherein the macro base station is home to the non-independent small base station; and generate the uplink scheduling information according to the scheduling event notification.

29. The non-independent small base station according to claim 28, further comprising a sending unit, configured to: send the uplink scheduling information to the user equipment over an enhanced physical downlink control channel ePDCCH of the non-independent small base station.

30. A macro base station, comprising:
a receiving unit, configured to receive a scheduling request SR, which is sent by a user equipment over a physical uplink control channel PUCCH of the macro base station, wherein a data transmission service for the user equipment is provided by a non-independent small base station that belongs to the macro base station;
a determining unit, configured to determine, according to the SR received by the receiving unit, uplink scheduling information carried on a physical uplink shared channel PUSCH of the non-independent small base station and intended for the user equipment; and
a sending unit, configured to send the uplink scheduling information determined by the determining unit to the user equipment over a physical downlink control channel PDCCH of the macro base station, and send the uplink scheduling information determined by the determining unit to the non-independent small base station, so that the user equipment sends uplink control information UCI over the PUSCH of the non-independent small base station according to the uplink scheduling information.

31. A macro base station, comprising:
a receiving unit, configured to receive a scheduling request SR, which is sent by a user equipment over a physical uplink control channel PUCCH of the macro base station, wherein a data transmission service for the user equipment is provided by a non-independent small base station that belongs to the macro base station; and
a sending unit, configured to send, according to the SR received by the receiving unit, a scheduling event notification to the non-independent small base station that belongs to the macro base station, so that the non-independent small base station sends an uplink grant to the user equipment according to the scheduling event notification and receives uplink control information UCI, which is sent by the user equipment over a physical uplink shared channel PUSCH of the non-independent small base station.
